# EUROPÄISCHE PATENTSCHRIFT

(11) **EP 2 755 883 B1**
(45) Veröffentlichungstag und Bekanntmachung des Hinweises auf die Patenterteilung: **11.01.2017**
(21) Anmeldenummer: 12745797.6
(22) Anmeldetag: 17.07.2012
(51) Int. Cl.: B62D 15/02, B60R 1/00, G06T 15/20, G06K 9/00, B60K 37/04, B60K 35/00, G08G 1/16, G06T 15/10

(54) **FAHRERASSISTENZSYSTEM ZUR UNTERSTÜTZUNG EINES FAHRERS IN KOLLISIONSRELEVANTEN SITUATIONEN**
DRIVER ASSISTANCE SYSTEM FOR ASSISTING A DRIVER IN COLLISION-RELEVANT SITUATIONS
SYSTÈME D'ASSISTANCE AU CONDUCTEUR DESTINÉ À ASSISTER UN CONDUCTEUR DANS DES SITUATIONS ASSOCIÉES À UNE COLLISION

(30) Priorität: 12.09.2011 DE 102011082475
(43) Veröffentlichungstag der Anmeldung: 23.07.2014
(73) Patentinhaber: Robert Bosch GmbH, 70442 Stuttgart (DE)
(72) Erfinder: SANS SANGORRIN, Jorge, 70469 Stuttgart (DE); HECKEL, Joerg, 71277 Rutesheim (DE); MIELENZ, Holger, 73760 Ostfildern (DE)
(86) Internationale Anmeldenummer: PCT/EP2012/063949
(87) Internationale Veröffentlichungsnummer: WO 2013/037530

(56) Entgegenhaltungen:
- EP-A1- 1 179 958
- EP-A1- 1 462 762
- EP-A1- 1 642 768
- EP-A1- 2 133 237
- EP-A2- 1 302 365
- WO-A1-2011/045750
- US-A1- 2007 003 162

## Beschreibung

### Stand der Technik

Die vorliegende Erfindung betrifft ein Fahrerassistenzsystem, mittels welchem eine Anzeige generiert werden kann, wodurch der Fahrer eines Fahrzeugs insbesondere in kollisionsrelevanten Situationen, wie beispielsweise beim Einparken oder Manövrieren, eine optische Hilfestellung zur sicheren Fortbewegung seines Fahrzeugs erhalten kann. Im Stand der Technik sind hierzu verschiedene Ansätze vorgeschlagen, von welchen sich viele unter dem Begriff "Parkassistenzsysteme" zusammenfassen lassen. Hierbei vermessen Abstandssensoren das nahe Umfeld eines Fahrzeugs und geben Signale aus, über welche eine Abschätzung der Abstände des Ego-Fahrzeugs zu den im jeweiligen Sensorbereich kollisionsrelevanten Objekten vorgenommen werden kann.

Dokument EP 1462762 A1 ist als nächstliegender Stand der Technik nach dem Oberbegriff des Anspruchs 1 zu sehen und beschreibt ein Fahrzeugüberwachungssystem, das Mittel zur Bilderfassung sowohl zum Aufnehmen von Bildern der Fahrzeugumgebung als auch zum Erfassen von Bildinformationen aufweist. Die Mittel zum Erfassen einer Fahrzeuginformation umfassen ein Kopplungssystem, das fortlaufend eine Bewegung des Fahrzeugs erfasst. Es werden dreidimensionale Fahrzeugumgebungsdaten basierend auf Kameradaten erzeugt und dem Fahrer in einem Display angezeigt.

Dokument DE 10 2009 038 406 A1 zeigt ein Verfahren, bei welchem ein 3D-Datensatz erzeugt wird, welcher zur Unterstützung des Fahrers bei einem Fahrmanöver, insbesondere einem Einparkmanöver, eingesetzt werden kann. Den vorbekannten Verfahren bzw. Systemen ist dabei gemeinsam, dass entweder keine räumliche Darstellung des kollisionsrelevanten Bereiches zwischen dem Ego-Fahrzeug und dem Fremdobjekt stattfindet oder eine kamerabasierte Darstellung aus vorgegebener Perspektive erfolgt.

Es ist daher eine Aufgabe der vorliegenden Erfindung, ein Fahrerassistenzsystem zur Verfügung zu stellen, welches einen Fahrer umfassender über eine kollisionsrelevante Fahrzeugsituation informiert.

### Offenbarung der Erfindung

Das erfindungsgemäße Fahrerassistenzsystem löst die vorgenannte Aufgabe durch eine Merkmalskombination gemäß Anspruch 1. Unter einer kollisionsrelevanten Situation eines Fahrzeugs sei im Rahmen der vorliegenden Erfindung ein Befahren einer Engstelle zu verstanden, bei welchem die Übersicht des Fahrers über das Fahrzeug aufgrund geringer Abstände zu Objekten der Umgebung von erhöhter Wichtigkeit ist. Beispiele für solche Situationen sind das Einparken, Rangieren in Garagen sowie auf Parkplätzen sowie im zähfließenden Verkehr insbesondere in Baustellenbereichen. Erfindungsgemäß umfasst das Fahrerassistenzsystem zumindest einen Sensor zur Entfernungsmessung, welcher selbstverständlich auch für andere Fahraufgaben bzw. andere Assistenzsysteme Verwendung finden kann. Beispiele für Sensortypen sind Video-, Radar-, Lidar-, Ultraschall- sowie Lasersensoren. Selbstverständlich kann auch ein dem Sensor entsprechender Sender im Fahrzeug vorgesehen sein, um Reflexionen an Umgebungsobjekten zu provozieren. Die Auswerteeinheit des erfindungsgemäßen Systems umfasst einen programmierbaren Prozessor, welcher die wesentlichen Schritte der Datenverarbeitung in Verbindung mit der erfindungsgemäßen Lehre durchführen kann. Die Auswerteeinheit kann sich eines Mittels zum Bereithalten von Daten, insbesondere eines Speichermittels, bedienen, in welchem Daten bezüglich der Oberflächengeometrie des Ego-Fahrzeugs bereitgehalten werden. Auch können in dem Speichermittel Oberflächengeometrien korrespondierend zu verschiedenen Fahrzeugkonfigurationen (Fahrt mit Anhänger, Fahrt mit Dachgepäckträger, abgesenkte Luftfederung, etc.) hinterlegt und bei entsprechender Fahrzeugkonfiguration zur Anwendung gelangen. Erfindungsgemäß ist die Auswerteeinheit eingerichtet, die vom Sensor bzw. den Sensoren erhaltenen Signale zu einem dreidimensionalen Modell der Umgebung ("Bild") zusammenzufügen. Um bei einem nachfolgenden Speichervorgang Systemperformance und Speicherplatz zu sparen, kann vorgesehen sein, dass bereits vor einem Abspeichern und Verwenden des Umgebungsabbildes die Datenmenge von Umgebungsbereichen reduziert wird, welche als hinsichtlich einer möglichen Kollision für weniger relevant erachtet werden. Beispielsweise kann eine räumlich nur wenig ausgedehnte, jedoch hinsichtlich einer möglichen Kollision sehr relevante Stelle eines Objektes anhand nur weniger Datenpunkte innerhalb des Abbildes repräsentiert werden und beim anschließenden Aufbau der Darstellung für den Fahrer optisch hervorgehoben werden. Mit anderen Worten kann beispielsweise eine lediglich auf Höhe der Stoßstange des Ego-Fahrzeuges angeordnete, kollisionsrelevante Stelle in der Darstellung als senkrechter Stab oder senkrechte Fläche mit einer Erstreckung vom Boden bis zu einer vorgegebenen Höhe erscheinen, um einerseits möglichst wenig Daten handhaben zu müssen, andererseits den Fahrer zuverlässig über die Relevanz der Stelle hinsichtlich einer möglichen Kollision zu informieren. Indem die Auswerteeinheit Zugriff auf die in den Speichermitteln hinterlegten Daten zur Oberflächengeometrie des Ego-Fahrzeugs hat, ist es ihr möglich, anhand der Sensordaten Abstände von Punkten, insbesondere kollisionsrelevanten Punkten, der Fahrzeugumgebung zur Fahrzeugoberfläche zu ermitteln und zu quantifizieren. Mit anderen Worten kann die Auswerteeinheit ermittelte Abstände zueinander vergleichen und eine Aussage darüber treffen, welcher Abstand hinsichtlich einer möglichen Kollision als besonders relevant einzustufen ist. Diese Informationen kann die Auswerteeinheit bei der Erstellung eines Datensatzes zur optischen Darstellung eines Fahrmanövers bzw. einer Fahrzeugsituation verwenden und bei der Darstellung der Engstelle zur Auswahl einer für den Fahrer geeigneten Perspektive verwenden. Das erfindungsgemäße Fahrerassistenzsystem bietet somit den Vorteil, dass ein hinsichtlich einer möglichen Kollision als besonders relevant eingestufter Ausschnitt vergrößert und/oder hinsichtlich seiner Perspektive fahr(-zeug-)situationsspezifisch optimiert dargestellt werden kann, wodurch eine Beurteilung durch den Fahrer erheblich erleichtert werden kann.

Die Unteransprüche zeigen bevorzugte Weiterbildungen der Erfindung.

Bevorzugt kann das erfindungsgemäße Fahrerassistenzsystem die ermittelten Abstände zwischen dem Fahrzeug und seiner Umgebung hinsichtlich ihrer Relevanz sortieren und dem Anwender des Systems bzw. dem Fahrer des Fahrzeugs zur Auswahl vorstellen. Sofern eine Auswahl durch den Anwender nicht erfolgt bzw. eine durch das System bereits getroffene Auswahl nicht durch eine Anwendereingabe geändert wird, kann das System eingerichtet sein, die Perspektive in Abhängigkeit des geringsten aktuellen Abstandes und/oder des geringsten prädizierten Abstandes zu wählen. Somit ist immer gewährleistet, dass der Anwender des Systems die Situation mit der höchsten Kollisionsrelevanz dargestellt wird, sofern er/sie nicht eine andere Situation als relevanter erachtet.

Erfindungsgemäß ist es weiter vorgegehen, dass die Auswerteeinheit eingerichtet ist, Odometriedaten des Fahrzeugs zu verarbeiten, um eine Trajektorie des Fahrzeugs zu prädizieren. Mit anderen Worten kann eine bisher gefahrene Trajektorie extrapoliert werden und/oder ein aktueller Lenkeinschlag und/oder eine gewählte Fahrstufe ("D" (Drive), "R" (Reverse)) dahingehend ausgewertet werden, in welche Richtung sich das Fahrzeug unter Beibehaltung dieser Parameter bewegen wird. Nach der Ermittlung der prädizierten Trajektorie wird die Auswerteeinheit den Datensatz zur optischen Darstellung der Fahrzeugsituation um ein Symbol erweitern, welches die prädizierte Trajektorie darstellt. Hierdurch kann der Fahrer abschätzen, wie sich die gewählte Fahrstufe und/oder der gewählte Lenkeinschlag auf die weitere Bewegung des Fahrzeugs auswirken werden.

Weiter kann vorgesehen sein, dass die Auswerteeinheit eingerichtet ist, Objekte der Fahrzeugumgebung hinsichtlich der prädizierten Trajektorie dahingehend zu untersuchen, ob eine Kollision des Ego-Fahrzeugs droht und/oder in welchem Abstand das Ego-Fahrzeug das Objekt voraussichtlich passieren wird. Hierdurch wird eine konkrete Information des Fahrers ermöglicht, um eine bevorstehende Kollision abzuwenden und einzuschätzen, ob der berechnete Abstand für eine sichere Fortbewegung des Fahrzeugs hinreichend ist.

Vorteilhaft kann vorgesehen sein, dass die Auswerteeinheit eingerichtet ist, Objekte, zu welchen sich das Fahrzeug auf Kollisionskurs befindet, in der optischen Darstellung hervorzuheben bzw. optisch zu markieren. Beispielsweise kann die Größe und/oder die Farbe (zyklisch) verändert, ein Rahmen um das betreffende Objekt gezeichnet oder eine andere Art von Hinweis bezüglich dieses Objektes gegeben werden. Alternativ oder zusätzlich kann eine Signalisierungseinheit angesprochen werden, um den Fahrer des Fahrzeugs in geeigneter Weise, insbesondere optisch und/oder haptisch und/oder akustisch, darüber zu informieren, dass eine Kollision bevorsteht bzw. die Fahrtrichtung geändert bzw. die Fahrt verzögert werden sollte. Als haptische Signalisierung bietet sich an, einen mit dem Lenkrad des Fahrzeugs gekoppelten Vibrationsgeber, wie beispielsweise eine rotierende Unwuchtmasse, anzusprechen. Zusätzlich oder Alternativ können alternierende Lenkmomente erzeugt werden, um den Fahrer zu alarmieren ("wachzurütteln"). Zusätzlich oder alternativ können auch Informationen über die Position(en) möglicher Kollisionsobjekte und/oder Hinweise auf ratsame Ausweichmanöver (z.B. durch azyklisch aufgebrachte Kraftsignale) als Lenkmomente transportiert werden. Mit anderen Worten ist es möglich, durch Wechselbewegungen um eine Ruhelage eine Richtungsinformation dadurch zu kodieren, dass die Bewegung in eine erste Richtung schneller als eine darauf folgende Bewegung in eine zweite Richtung erfolgt. Eine solche Wechselbewegung kann selbstverständlich einem "globalen" Lenkmoment überlagert werden. Zusätzlich oder Alternativ ist es möglich, eine Richtungsinformation einerseits durch die Vibrationsfrequenz des Lenkrades, andererseits über den Ort der Vibration (z.B. linke Fahrersitzseite, rechte Fahrersitzseite, linke Lenkradhälfte, rechte Lenkradhälfte) zu kodieren. Akustisch könnte der Fahrer des Fahrzeugs nicht lediglich darüber informiert werden, dass eine Kollision bevorsteht, sondern beispielsweise auch durch zyklisch wiederholte Hinweise über den aktuell ermittelten Abstand zum Kollisionsobjekt. Hierdurch kann der Fahrer in seiner Fahraufgabe unterstützt werden, ohne dass sein Blick hierzu auf eine Anzeige gerichtet sein muss. Sofern ein Head-up-Display im Fahrzeug vorgesehen ist, kann eine optische Anzeige der vorgenannten Informationen auch mittels dieses Displays in die Windschutzscheibe des Fahrzeugs projiziert werden.

Weiter vorteilhaft kann der Abstand zu einer dem Fahrzeug nahekommenden Stelle der Fahrzeugumgebung dadurch bewertet werden, dass die Kollisionsobjekte ihre Farbe beispielsweise von "Grün" über "Gelb" nach "Rot" wechseln, wenn ihr Abstand zur Fahrzeugoberfläche sich verringert. Alternativ oder zusätzlich kann die Anzeige der Engstelle durch Linien, Pfeile und/oder Zahlenwerte ergänzt werden, durch welche der Fahrer des Fahrzeugs über die Lage der Engstelle sowie den aktuell ermittelten Abstand beispielsweise in Zentimetern informiert wird. Dies bietet den Vorteil, dass bei einer raschen Veränderung des Abstandes eine hohe Erneuerungsrate des aktuellen Abstandswertes bzw. seiner Bewertung in Form von Farbwechseln möglich ist, während eine akustische oder haptische Wiedergabe eines aktuellen Abstandswertes nur lediglich ca. einmal pro Sekunde bzw. gar nicht erfolgen kann.

Erfindungsgemäß werden Sendemittel und Empfangsmittel vorgesehen, auf welche das Fahrerassistenzsystem bzw. seine Auswerteeinheit zugreifen kann. Durch Sendemittel kann die Auswerteeinheit die Daten zur dreidimensionalen Darstellung der Engstelle im Ansprechen auf eine Anwendereingabe an ein externes Gerät senden. Das externe Gerät kann beispielsweise ein Smartphone oder ein Tablet-PC sein. Je nach Geschwindigkeit der Datenverbindung kann es vorteilhaft sein, lediglich einzelne Daten repräsentierend ausgewählte Abstände zwischen Fahrzeug und Umgebung vom Fahrerassistenzsystem an das externe Gerät zu senden, welches wiederum die Darstellung der übermittelten Daten gegebenenfalls mit einer entsprechenden Interpretationsmöglichkeit dieser Daten darstellt. Andererseits kann das erfindungsgemäße Fahrerassistenzsystem bereits fertige Bilddaten auf das externe Gerät senden ("streaming"). Während im erstgenannten Fall eine Interpretation und Auswertung der im externen Gerät empfangenen Daten möglich ist (dies beinhaltet auch eine Auswahl einer Darstellungsperspektive), kann insbesondere für den zweitgenannten Fall vorgesehen sein, am externen Gerät Anwendereingaben zur Auswahl der Perspektive der Darstellung vornehmen zu können und an das Fahrerassistenzsystem zu senden. Dieses kann im Ansprechen auf das Empfangen dieser Steuerdaten eine alternative Perspektive generieren und diese an das externe Gerät senden. Durch die Verwendung eines externen Gerätes zur Anzeige und Steuerung der Anzeige des dreidimensionalen Bildes der Fahrzeugsituation ist der Fahrer bzw. Anwender des Fahrerassistenzsystems unabhängig von einem im Fahrzeug verbauten Display stets optimal über die aktuelle Fahrzeugsituation informiert. Zudem können weitere Personen auf eine erfolgreiche Navigation durch Engstellen hinwirken. Sofern das Fahrerassistenzsystem verwendet wird, um bestimmte Fahraufgaben automatisch durchzuführen, ist es zudem möglich, dass der Fahrer außerhalb des Fahrzeugs die Navigation über das externe Gerät verfolgt, steuert und ein Passieren bestimmter Engstellen, deren Passieren er für vertretbar hält, quittiert. Darüber hinaus bietet ein Nachverfolgen des automatisch durchgeführten Fahrmanövers über ein externes Gerät den Vorteil, ein- und dieselbe Situation in natura und zusätzlich gemäß der Darstellung durch das Fahrerassistenzsystem zu verfolgen und somit die Interpretationsweise bestimmter Situationen durch das Fahrerassistenzsystem zu erlernen.

Insbesondere bevorzugt umfassen die Odometriedaten Daten über einen aktuellen Lenkeinschlag des Fahrzeugs. Hierdurch kann bereits im Stillstand des Fahrzeugs eine Trajektorie prädiziert und bewertet werden. Die vorstehend genannten Merkmale der vorliegenden Erfindung werden im Folgenden anhand der beigefügten Zeichnungsfiguren näher erläutert.

### Kurze Beschreibung der Zeichnungen

Nachfolgend werden Ausführungsbeispiele der Erfindung unter Bezugnahme auf die begleitenden Zeichnungen im Detail beschrieben. In der Zeichnung ist:
- Figur 1: eine schematische Systemübersicht über ein Ausführungsbeispiel des erfindungsgemäßen Fahrerassistenzsystems;
- Figur 2a: eine Ansicht einer möglichen Fahrzeugsituation aus der Fahrerperspektive;
- Figur 2b-e: dreidimensionale Abbildungen von Fahrzeugsituationen aus unterschiedlichen Perspektiven;
- Figur 3a,b: eine Detailansicht einer links bzw. rechts des Fahrzeugs bestehenden Engstelle;
- Figur 3c: ein Ausschnitt einer dreidimensionalen Abbildung einer Engstelle, wobei die Engstelle angezeigt und quantitativ wiedergegeben wird;
- Figur 4: eine dreidimensionale Abbildung, bei welcher eine prädizierte Trajektorie und eine bevorstehende Kollision angezeigt werden;
- Figur 5: eine Übersicht über die Schritte eines Ausführungsbeispiels für ein erfindungsgemäßes Verfahren.

### Ausführungsformen der Erfindung

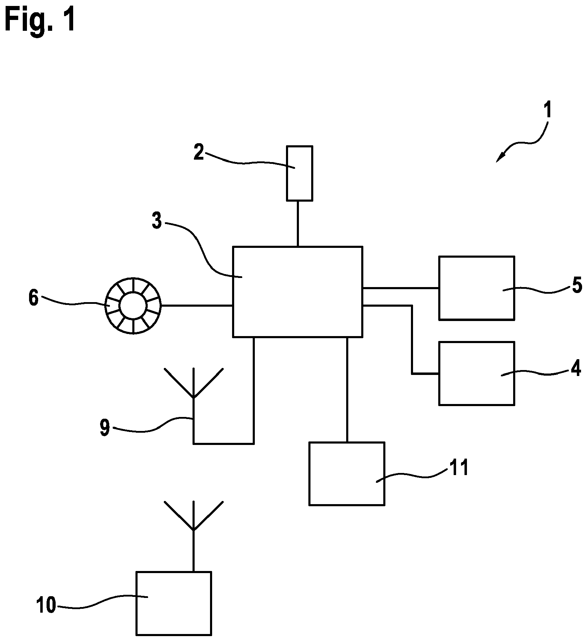

Figur 1 zeigt eine Übersicht über die Komponenten eines erfindungsgemäßen Fahrerassistenzsystems 1. Ein Sensor 2 ist zur Abstandsmessung mit einer Auswerteeinheit 3 verbunden, an welche er die ermittelten Messdaten liefert. Weiter ist die Auswerteeinheit 3 mit einem Betriebszustandsgeber 4 verbunden, der bestimmte Betriebsparameter, wie beispielsweise aktuelle Geschwindigkeit, die aktuell gewählte Fahrstufe und andere Informationen bezüglich des aktuellen Betriebszustands des Fahrzeugs bereithält. Ebenfalls mit der Auswerteeinheit 3 verbundene Speichermittel 5 sind eingerichtet, Informationen über die Oberflächengeometrie des Fahrzeugs in sämtlichen möglichen Konfigurationen des Fahrzeugs (mit Anhänger, mit Dachgepäckträger, etc.) abrufbar bereitzuhalten. Über einen Odometriesensor 6 kann die Auswerteeinheit Informationen über die bisher gefahrene Strecke und insbesondere über einen aktuellen Lenkeinschlagswinkel beziehen, um aus diesen Informationen eine Trajektorie zu prädizieren. Das dargestellte Ausführungsbeispiel des erfindungsgemäßen Fahrerassistenzsystems 1 verfügt des Weiteren über einen Monitor 11, welcher mit der Auswerteeinheit 3 verbunden ist. Der Monitor 11 dient dazu, die Daten, welche die Auswerteeinheit 3 zur Information des Fahrers aufbereitet hat, darzustellen. Zu guter Letzt verfügt das dargestellte Fahrerassistenzsystem über eine Sende-Empfangseinheit 9, welcher es der Auswerteeinheit 3 ermöglicht, die zur Information des Fahrers erstellten Datensätze an einen Tablet-PC 10 als externes Gerät zu senden. Sämtliche dargestellten Komponenten sind eingerichtet, im Sinne der vorliegenden Erfindung eines Fahrerassistenzsystems 1 zusammenzuwirken, was jedoch nicht bedeutet, dass sie nicht einzeln oder im Verbund weitere Aufgaben erfüllen und/oder originär für andere Aufgaben vorgesehen sein können.

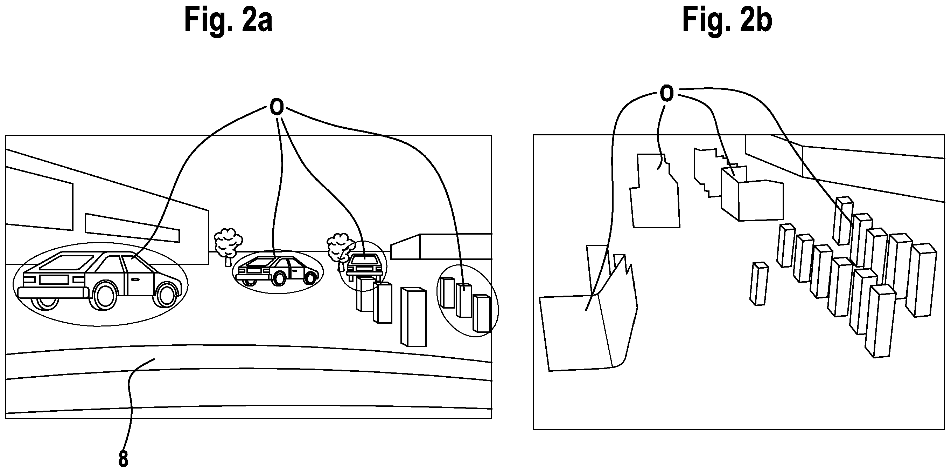

Figur 2a zeigt eine Ansicht einer möglichen Fahrzeugsituation aus der Fahrerperspektive. Parkende Fahrzeuge und übereinander gestapelte Getränkekästen bilden Objekte des Fahrzeugumfeldes, bezüglich welcher Informationen über den Abstand zum Ego-Fahrzeug kollisionsrelevant sein könnten.

Figur 2b zeigt eine durch ein erfindungsgemäßes System generierte dreidimensionale Abbildung der in Fig. 2a dargestellten Fahrsituation. Die Autos sowie die Getränkekästen sind nicht mehr als solche erkennbar, sondern sind durch senkrecht zum Boden angeordnete Linien ersetzt, welche an denjenigen Stellen angeordnet sind, welche den geringsten Abstand des jeweiligen Objektbereichs zum Ego-Fahrzeug haben. Mit anderen Worten ist jedes Objekt durch eine Anzahl von Linien charakterisiert, welche sich an denjenigen Stellen befinden, an welchen eine Kollision bzw. Berührung mit dem Ego-Fahrzeug zuerst stattfinden könnte.

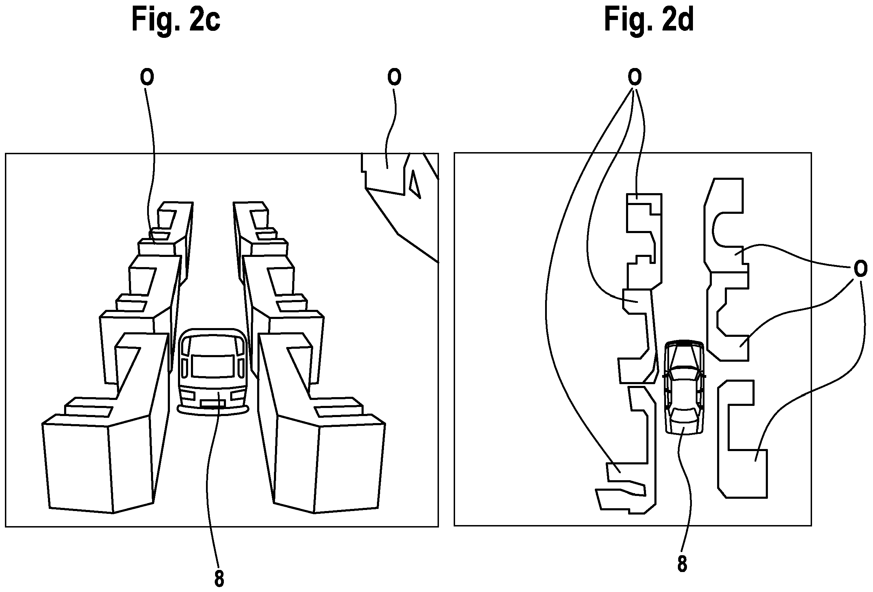

Figur 2c zeigt ein dreidimensionales Abbild einer Fahrsituation, in welcher ein Fahrzeug 8 als Ego-Fahrzeug eine aus parkenden Fremdfahrzeugen bestehende Engstelle passiert. Die Perspektive der Darstellung ist so gewählt, dass das Ego-Fahrzeug komplett in der Darstellung enthalten ist.

Figur 2d zeigt die in Figur 2c bestehende Darstellung aus der Vogelperspektive, bei welcher sich der Betrachter senkrecht über dem Fahrzeug 8 befindet. Gut erkennbar sind die Umrisse der parkenden Autos als Objekte O der Ego-Fahrzeugumgebung.

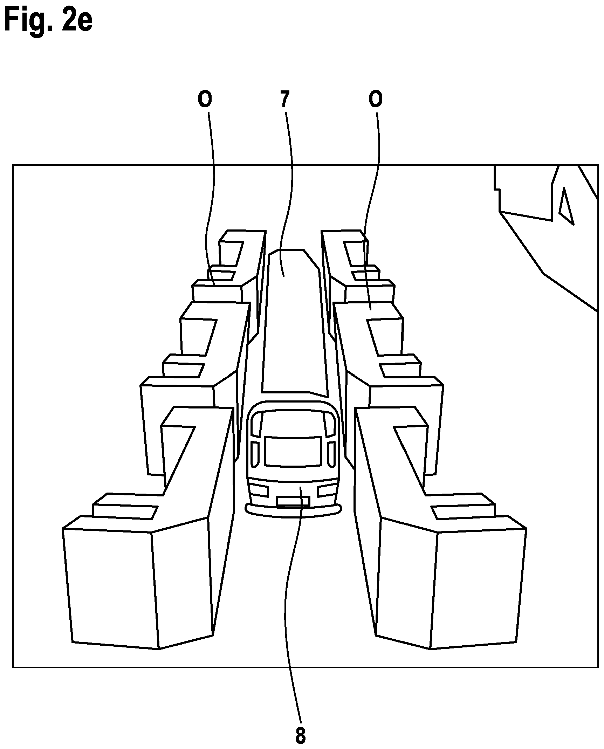

Figur 2e zeigt die in Figur 2c dargestellte Situation in identischer Perspektive. Gegenüber Figur 2c ist in Figur 2e eine prädizierte Trajektorie 7 für das Fahrzeug 8 eingezeichnet. Diese auch als "Fahrschlauch" bezeichnete Trajektorie 7 ist im Wesentlichen als breiter heller Streifen dargestellt, welchen das Fahrzeug während seiner Fortbewegung voraussichtlich überfahren wird.

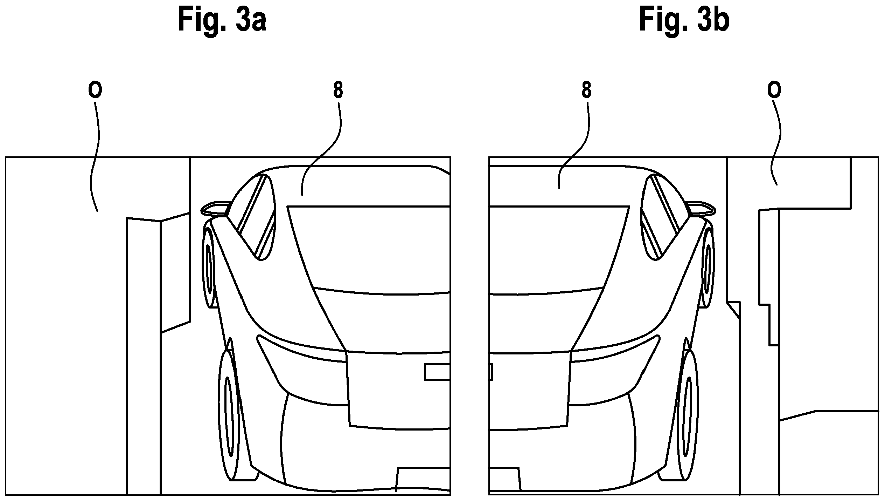

Figur 3a zeigt die in Figur 2c dargestellte Fahrzeugsituation aus einer anderen Perspektive. Der Betrachter scheint ca. 1 m hinter dem Fahrzeugheck positioniert zu sein, wobei sein Blick in etwa mit der linken Fahrzeugseite fluchtet. Aus dieser Perspektive ist die zwischen dem linken Fahrzeugspiegel des Ego-Fahrzeugs und einem parkenden Fahrzeug bestehende Engstelle gut einschätzbar. Der Betrachter erhält einen wertvollen Überblick über die Entfernungen zwischen dem Ego-Fahrzeug und den sich längsseits des Ego-Fahrzeugs befindlichen parkenden Autos.

Figur 3b zeigt die in Figur 3a dargestellte Situation für den Fall, dass die Engstelle sowie die parkenden Autos sich auf der rechten Fahrzeugseite befinden.

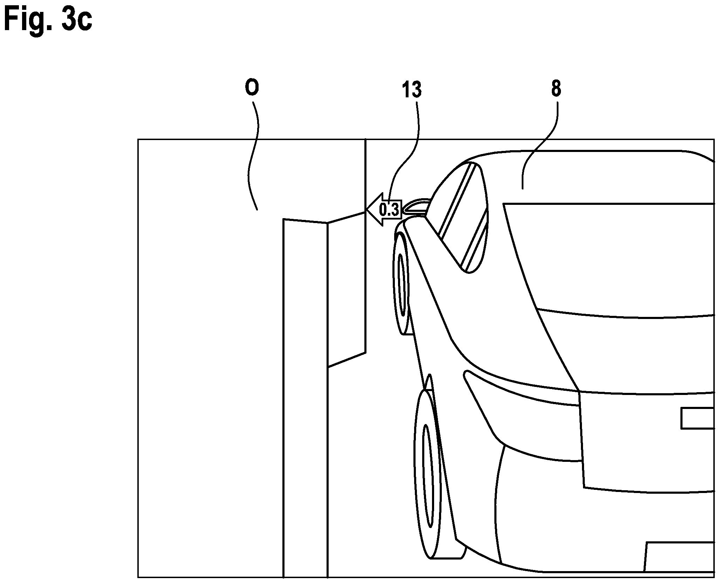

Figur 3c zeigt die in Figur 3a dargestellte Situation, wobei die zwischen dem linken Fahrzeugspiegel und einem parkenden Fahrzeug bestehende Engstelle durch einen Pfeil als Indikator 13 hervorgehoben wird. Der Ursprung des Pfeils ist an derjenigen Stelle des Fahrzeugspiegels angeordnet, welcher dem parkenden Fahrzeug am nächsten kommt. Die Pfeilspitze endet an derjenigen Stelle des parkenden Fahrzeugs o, welche dem Spiegel des Fahrzeugs 8 aktuell am nächsten kommt. Innerhalb des Pfeils ist der Zahlenwert "0,3" dargestellt, welcher den aktuellen Abstand von 0,3 m wiedergibt.

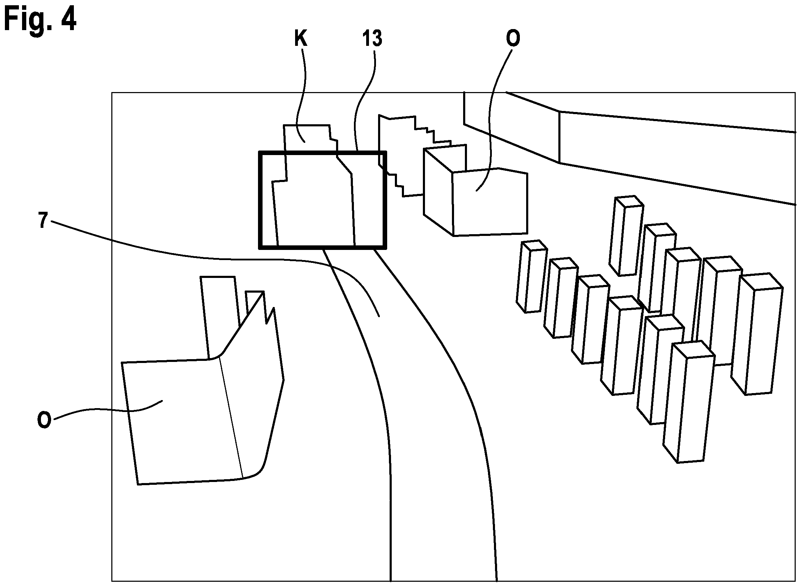

Figur 4 zeigt eine Fahrzeugsituation, in welcher eine prädizierte Trajektorie 7 zwischen Abbildungen von Umgebungsobjekten O hindurchführt. Weil die Trajektorie 7 an einem Kollisionsobjekt k endet, ist das Kollisionsobjekt k mit einem hellen Rahmen als Indikator 13 optisch hervorgehoben. Innerhalb des hellen Rahmens ist der Kollisionsbereich des Kollisionsobjekts k vergrößert dargestellt, so dass der Betrachter der Abbildung mehr Informationen über das Kollisionsobjekt erhält.

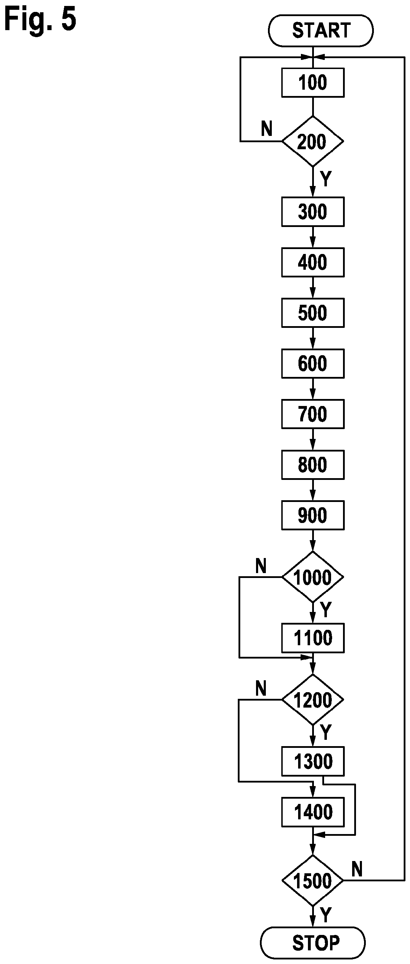

Figur 5 zeigt eine Übersicht über die Schritte eines Ausführungsbeispiels, gemäß welcher das erfindungsgemäße Fahrerassistenzsystem die erfindungsgemäße Darstellung generiert. Das erfindungsgemäße Fahrerassistenzsystem wird gestartet, indem beispielsweise die Zündung des Fahrzeugs eingeschaltet wird, eine bestimmte Fahrstufe eingelegt oder eine Anwendereingabe registriert wird. Anschließend ermittelt das System in Schritt 100 Daten, insbesondere Entfernungsdaten bezüglich Entfernung von Objekten in der Fahrzeugumgebung. In Schritt 200 wird ermittelt, ob ein Objekt in einer Entfernung zum Ego-Fahrzeug angeordnet ist, die einen vorgegebenen unteren Schwellwert unterschreitet. Ist dies nicht der Fall (N), werden in Schritt 100 weitere Entfernungsdaten gesammelt. Ist der vorgegebene Schwellwert unterschritten (Y), werden in Schritt 300 Daten bezüglich der Geometrie der Fahrzeugkontur bzw. der Fahrzeugoberfläche geladen. Anschließend werden in Schritt 400 kritische Abstandswerte zwischen dem Fahrzeug und den Umgebungsobjekten O berechnet. Hierbei kann auch eine Vielzahl in Frage kommender Abstandsdaten gesammelt und bereitgehalten werden. In Schritt 500 wird, basierend auf den in Schritt 400 ermittelten Abstandsdaten, eine Perspektive zur Darstellung der bestehenden Engstelle bzw. der bestehenden Engstellen gewählt. Anschließend wird in Schritt 600 eine Ansicht der aktuellen Engstelle aus der gewählten Perspektive generiert. In Schritt 700 werden Odometriedaten (z.B. Lenkeinschlag) geladen und anhand dieser in Schritt 800 eine Trajektorie für das Fahrzeug 8 prädiziert. In Schritt 900 werden, basierend auf den aktuellen Messdaten zur Fahrzeugumgebung und der prädizierten Trajektorie, bevorstehende, kritische Abstände des Fahrzeugs 8 zu ausgewählten Objekten seiner Umgebung prädiziert. In Schritt 1000 wird anschließend ermittelt, ob die prädizierten Abstände auf eine bevorstehende Kollision bzw. auf einen als kritisch einzustufenden Abstand hinweisen. Ist dies der Fall, wird der Fahrer im Schritt 1100 in geeigneter Weise (zum Beispiel durch Einfärbung oder Hervorhebung des betreffenden Objektes oder durch akustische und/oder haptische Signale) gewarnt. Ist eine Kollision bzw. ein kritischer Abstand nicht zu befürchten (N), wird in Schritt 1200 überprüft, ob eine Anwendereingabe eine bestimmte Perspektive zur Darstellung der Engstelle bzw. Fahrzeugsituation angefragt hat. Ist dies der Fall, wird in Schritt 1300 die gewählte Perspektive berechnet und dargestellt. Ist dies nicht der Fall (N), wird in Schritt 1400 eine Perspektive berechnet, anhand welcher die Engstelle mit der höchsten Kollisionsrelevanz besonders gut beurteilbar ist. Unabhängig von einer Anwendereingabe zur Wahl der Darstellungsperspektive wird in Schritt 1500 überprüft, ob eine vordefinierte Abbruchbedingung erfüllt ist. Als Abbruchbedingung kommen beispielsweise das Wählen einer bestimmten Fahrstufe, das Ausschalten der Zündung, das Unter- oder Überschreiten eines jeweiligen vordefinierten Geschwindigkeitsschwellwertes sowie eine Anwendereingabe in Frage. Ist die Abbruchbedingung erfüllt (Y), so endet der vom Fahrerassistenzsystem 1 ausgeführte Prozess. Andernfalls (N) beginnt der zuvor beschriebene Ablauf mit Schritt 100 erneut.

Kerngedanke der vorliegenden Erfindung ist, anhand von Abstandsdaten eines Fahrzeuges zu seinem Umfeld eine Anzeige zu generieren, in welcher kollisionsrelevante Informationen enthalten sind und gegebenenfalls weitere Hinweise dahingehend gegeben werden, an welchen Stellen der Darstellung ein besonderes Augenmerk hinsichtlich der Einschätzung bzw. Abwendung von bevorstehenden Kollisionen angemessen erscheint. Hierzu kehrt die vorliegende Erfindung von bekannten Verfahren und Vorgehensweisen dahingehend ab, dass eine fahrzeugsituationsspezifische Perspektive einer Abbildung der kollisionsrelevanten Umgebungsobjekte in Abhängigkeit einer aktuellen Fahrzeugsituation gewählt bzw. vorgeschlagen werden kann.

Während die vorliegende Erfindung anhand der beigefügten Figuren ausführlich und detailliert beschrieben worden ist, bleibt der Schutzbereich der vorliegenden Erfindung allein durch die beigefügten Ansprüche beschränkt.

## Patentansprüche

1. Fahrerassistenzsystem zur Unterstützung eines Fahrers in kollisionsrelevanten Situationen eines Fahrzeugs (8), wobei das Fahrerassistenzsystem umfasst:
- mindestens einen Sensor (2) zur Entfernungsmessung;
- eine Auswerteeinheit (3);
- Mittel (5) zum Bereithalten von Daten bezüglich der Oberflächengeometrie des Fahrzeugs;
wobei die Auswerteeinheit (3) eingerichtet ist,
- anhand von Signalen des Sensors (2) ein dreidimensionales Abbild der Fahrzeugumgebung (F) zu erstellen; und
- anhand von Signalen des Sensors (2) und von Daten bezüglich der Oberflächengeometrie des Fahrzeugs (8) Abstände von Punkten der Fahrzeugumgebung (F) zur Fahrzeugoberfläche zu ermitteln, und
- einen Datensatz zur optischen Darstellung eines fahrzeugsituationsspezifischen Ausschnittes des dreidimensionalen Abbildes einer aktuellen Fahrzeugsituation zu erstellen, **dadurch gekennzeichnet, dass** die Auswerteeinheit (3) eingerichtet ist, aus den mittels eines Odometriesensors (6) des Fahrzeugs (8) ermittelten Daten eine Trajektorie (7) des Fahrzeugs (8) zu prädizieren und die Auswerteeinheit (5) eingerichtet ist, die Daten repräsentierend die prädizierte Trajektorie (7) in den Datensatz zur optischen Darstellung der Fahrzeugumgebung (F) zu integrieren, wobei das Fahrerassistenzsystem Sendemittel und Empfangsmittel (9), bevorzugt zum drahtlosen Senden und Empfangen, umfasst und eingerichtet ist,
- die Daten zur optischen Darstellung der Fahrzeugsituation im Ansprechen auf eine Anwendereingabe an ein externes Gerät (10) zu senden und/oder
- Anwendereingaben, insbesondere zur Auswahl der Perspektive des anzuzeigenden Ausschnittes des dreidimensionalen Abbildes der Fahrzeugsituation, von einem externen Gerät (10) zu empfangen.

2. Fahrerassistenzsystem nach Anspruch 1, wobei die Auswerteeinheit (3) eingerichtet ist, bei der Erstellung des Datensatzes zur optischen Darstellung der Fahrzeugsituation die Perspektive in Abhängigkeit der ermittelten Abstände festzulegen.

3. Fahrerassistenzsystem nach Anspruch 1 oder 2, wobei bei der Erstellung des Datensatzes zur optischen Darstellung der Fahrzeugsituation eine Perspektive im Ansprechen auf eine Anwendereingabe und/oder in Abhängigkeit des geringsten aktuellen und/oder prädizierten Abstandes zwischen kollisionsrelevanten Punkten der Fahrzeugumgebung (F) und der Fahrzeugoberfläche gewählt wird.

4. Fahrerassistenzsystem nach Anspruch 1, wobei die Auswerteeinheit (5) eingerichtet ist zu ermitteln, ob sich Objekte (O) der Fahrzeugumgebung (F) hinsichtlich der aktuell prädizierten Trajektorie (7) des Fahrzeugs (8) auf Kollisionskurs befinden.

5. Fahrerassistenzsystem nach Anspruch 4, wobei die Auswerteeinheit (5) eingerichtet ist, wenn sich Objekte (O) der Fahrzeugumgebung (F) hinsichtlich der aktuell prädizierten Trajektorie (7) des Fahrzeugs (8) auf Kollisionskurs befinden,
- in dem Datensatz zur optischen Darstellung der Fahrzeugsituation die Kollisionsobjekte (K) hervorzuheben und/oder
- eine Signalisierungseinheit (12) zu veranlassen, den Fahrer des Fahrzeugs (8) in geeigneter Weise, insbesondere optisch und/oder haptisch und/oder akustisch darüber zu informieren.

6. Fahrerassistenzsystem nach einem der vorhergehenden Ansprüche, wobei die Auswerteeinheit (3) eingerichtet ist, dem Fahrer eine qualitative Beurteilung und/oder eine quantitative Information aktueller und/oder prädizierter Abstände des Fahrzeugs (F) zu Objekten (O), insbesondere durch die Einfärbung von Objekten (O) oder die Anzeige von Linien, Pfeilen und/oder Zahlenwerten, bereitzustellen.

7. Fahrerassistenzsystem nach einem der vorhergehenden Ansprüche, wobei die Odometriedaten Daten über einen aktuellen Lenkeinschlag des Fahrzeugs (8) umfassen.

## Claims

1. Driver assistance system for assisting a driver in collision-relevant situations of a vehicle (8), the driver assistance system comprising:
- at least one sensor (2) for measuring the distance;
- an evaluation unit (3);
- means (5) for holding data relating to the surface geometry of the vehicle;
the evaluation unit (3) being set up
- to create a three-dimensional image of the vehicle environment (F) on the basis of signals from the sensor (2); and
- to determine distances between points in the vehicle environment (F) and the vehicle surface on the basis of signals from the sensor (2) and data relating to the surface geometry of the vehicle (8), and
- to create a data record for optically representing a vehicle-situation-specific section of the three-dimensional image of a current vehicle situation,
**characterized in that**
the evaluation unit (3) is set up to predict a trajectory (7) of the vehicle (8) from the data determined using an odometry sensor (6) of the vehicle (8), and the evaluation unit (5) is set up to integrate the data representing the predicted trajectory (7) into the data record for optically representing the vehicle environment (F), the driver assistance system comprising transmitting means and receiving means (9), preferably for wireless transmission and reception, and being set up
- to transmit the data for optically representing the vehicle situation to an external device (10) in response to a user input, and/or
- to receive user inputs, in particular for selecting the perspective of that section of the three-dimensional image of the vehicle situation which is to be displayed, from an external device (10).

2. Driver assistance system according to Claim 1, the evaluation unit (3) being set up, when creating the data record for optically representing the vehicle situation, to stipulate the perspective on the basis of the determined distances.

3. Driver assistance system according to Claim 1 or 2, a perspective being selected in response to a user input and/or on the basis of the shortest current and/or predicted distance between collision-relevant points in the vehicle environment (F) and the vehicle surface when creating the data record for optically representing the vehicle situation.

4. Driver assistance system according to Claim 1, the evaluation unit (5) being set up to determine whether objects (O) in the vehicle environment (F) are on a collision course with respect to the currently predicted trajectory (7) of the vehicle (8).

5. Driver assistance system according to Claim 4, the evaluation unit (5) being set up, when objects (0) in the vehicle environment (F) are on a collision course with respect to the currently predicted trajectory (7) of the vehicle (8),
- to highlight collision objects (K) in the data record for optically representing the vehicle situation, and/or
- to cause a signalling unit (12) to inform the driver of the vehicle (8) of this in a suitable manner, in particular optically and/or haptically and/or acoustically.

6. Driver assistance system according to one of the preceding claims, the evaluation unit (3) being set up to provide the driver with a qualitative assessment and/or quantitative information relating to current and/or predicted distances between the vehicle (F) and objects (0), in particular by colouring objects (O) or by displaying lines, arrows and/or numerical values.

7. Driver assistance system according to one of the preceding claims, the odometry data comprising data relating to a current steering lock of the vehicle (8).

## Revendications

1. Système d'assistance au conducteur destiné à assister un conducteur dans des situations associées à une collision d'un véhicule (8), dans lequel le système d'assistance au conducteur comprend :
- au moins un capteur (2) destiné à mesurer l'éloignement,
- une unité d'analyse (3) ;
- des moyens (5) destinés à mettre à disposition des données relatives à la géométrie superficielle du véhicule ;
dans lequel l'unité d'analyse (3) est configurée pour établir,
- sur la base de signaux du capteur (2), une représentation tridimensionnelle de l'environnement (F) du véhicule ; et
- sur la base de signaux du capteur (2) et de données relatives à la géométrie superficielle du véhicule (8), pour déterminer les distances entre des points de l'environnement (F) du véhicule et la surface du véhicule, et
- pour établir un jeu de données destiné à la représentation optique d'une partie, spécifique à la situation du véhicule, de la représentation tridimensionnelle d'une situation actuelle du véhicule, **caractérisé en ce que** l'unité d'analyse (3) est configurée pour prédire une trajectoire (7) du véhicule (8) à partir des données déterminées au moyen d'un capteur odométrique (6) du véhicule (8) et l'unité d'analyse (5) est configurée pour intégrer les données représentant la trajectoire prédite (7) dans le jeu de données pour la représentation optique de l'environnement (F) du véhicule, dans lequel le système d'assistance au conducteur comprend des moyens d'émission et des moyens de réception (9), de préférence destinés à émettre et recevoir sans fil, et est configuré
- pour émettre les données destinées à la représentation optique de la situation du véhicule en réponse à une entrée de l'utilisateur sur un appareil externe (10) et/ou
- pour recevoir des entrées d'utilisateur, notamment pour la sélection de la perspective de la partie à afficher de la représentation tridimensionnelle de la situation du véhicule, en provenance d'un appareil externe (10).

2. Système d'assistance au conducteur selon la revendication 1, dans lequel l'unité d'analyse (3) est configurée pour définir la perspective lors de l'établissement du jeu de données destiné à la représentation optique de la situation du véhicule en fonction des distances déterminées.

3. Système d'assistance au conducteur selon la revendication 1 ou 2, dans lequel, lors de l'établissement du jeu de données destiné à la représentation optique de la situation du véhicule, une perspective est sélectionnée en réponse à une entrée de l'utilisateur et/ou en fonction de la distance la plus faible actuelle et/ou prédite entre des points associés à une collision de l'environnement (F) du véhicule et la surface du véhicule.

4. Système d'assistance au conducteur selon la revendication 1, dans lequel l'unité d'analyse (5) est configurée pour déterminer si des objets (0) de l'environnement (F) du véhicule se trouvent sur la trajectoire de collision compte tenu de la trajectoire (7) prédite actuelle du véhicule (8).

5. Système d'assistance au conducteur selon la revendication 4, dans lequel l'unité d'analyse (5) est configurée, lorsque des objets (O) de l'environnement (F) du véhicule se trouvent sur la trajectoire de collision compte tenu de la trajectoire (7) prédite actuelle du véhicule (8),
- pour mettre en évidence les objets de collision (K) dans le jeu de données destiné à la représentation optique de la situation du véhicule et/ou
- pour amener une unité de signalisation (12) à en informer le conducteur du véhicule (8) de manière appropriée, notamment, de manière optique et/ou haptique et/ou acoustique.

6. Système d'assistance au conducteur selon l'une quelconque des revendications précédentes, dans lequel l'unité d'analyse (3) est configurée pour fournir au conducteur un avis qualitatif et/ou une information quantitative concernant les distances actuelles et/ou prédites entre le véhicule (F) et des objets (O), notamment par coloration d'objets (0) ou affichage de lignes, de flèches et/ou de valeurs numériques.

7. Système d'assistance au conducteur selon l'une quelconque des revendications précédentes, dans lequel les données odométriques comprennent des données concernant un angle de braquage actuel du véhicule (8).
